Europäisches Patentamt

European Patent Office

Office européen des brevets

(11) Veröffentlichungsnummer: **0 439 790 A2**

## (12) EUROPÄISCHE PATENTANMELDUNG

(21) Anmeldenummer: 90124810.4

(22) Anmeldetag: 19.12.90

(51) Int. Cl.5: **G01F 23/18**

(30) Priorität: 20.12.89 DE 3942047

(43) Veröffentlichungstag der Anmeldung:
07.08.91 Patentblatt 91/32

(84) Benannte Vertragsstaaten:
**AT BE CH DE ES FR GB IT LI NL SE**

(71) Anmelder: **VEGA Grieshaber GmbH & Co.
Am Hohenstein 113 Postfach 10
W-7622 Schiltach(DE)**

(72) Erfinder: **Böhler, Ewald
Obere Rebbergstrasse 11
W-7620 Wolfach(DE)**
Erfinder: **Oehler, Thomas, Dipl.-Ing. (FH)
Baumgarten 5
W-7614 Gengenbach(DE)**

(74) Vertreter: **Patentanwälte Dipl.-Ing. Klaus
Westphal Dr. rer. nat. Bernd Mussgnug Dr.
rer.nat. Otto Buchner
Waldstrasse 33
W-7730 VS-Villingen-Schwenningen(DE)**

(54) Druckaufnehmer für hydrostatische Füllstandmessung.

(57) Der Druckaufnehmer für hydrostatische Füllstandmessung besteht aus einem beidseitig vertieften Grundkörper (1), auf dessen einer Seite eine elastisch verformbare Membran (3) und dessen anderer Seite eine unverformbare Abdeckplatte (6) angebracht sind. Der Grundkörper (1) bildet mit der Membran (3) eine erste Kammer (9) und mit der Abdeckplatte (6) eine zweite Kammer (10). Der Grundkörper besteht aus einem metallischen Ring (1a) und einem Glaseinsatz (1b). Membran (3), Grundkörper (1a) und Abdeckplatte (6) sind miteinander fest und elektrisch leitend verbunden. Auf den Oberflächen (7 und 11) des Einsatzes (1b) sind Schichtelektroden (8 und 12) angeordnet. Die Membran (3) und die Schichtelektrode (8) bilden einen Meßkondensator, die Abdeckplatte (6) und die Schichtelektrode (12) einen Referenzkondensator. Die Schichtelektroden (8 und 12) der Kondensatoren sind über achsparalle Anschlußstifte (18, 19), welche durch die Abdeckplatte (6) elektrisch isoliert hindurchgeführt sind, elektrisch verbindbar.

Fig. 1

## DRUCKAUFNEHMER FÜR HYDROSTATISCHE FÜLLSTANDMESSUNG

Die Erfindung betrifft einen Druckaufnehmer für hydrostatische Füllstandmessung der im Oberbegriff des Hauptanspruchs angegebenen Art. Diese für extrem hohe Überlastfestigkeit ausgelegten Druckaufnehmer haben nach derzeitigem Stand der Technik folgenden grundsätzlichen Aufbau.

Mittels einer metallischen kreisförmigen Membran, einer sogenannten Trennmembran, die unter Bildung einer Druckkammer mit einem geschlossenen Gehäuse verbunden ist, werden die sich in Abhängigkeit vom Füllstand ergebenden Drücke aufgenommen. Diese Druckkammer ist über eine Leitung mit der eigentlichen Meßkammer verbunden, deren unter Druck auslenkbare Membran zusammen mit einer feststehenden Elektrode einen veränderbaren Meßkondensator bildet, dessen Kapazität zur Ermittlung des Meßwertes mit der konstanten Kapazität eines Referenzkondensators verglichen wird. Druckkammer, Verbindungsleitung und Meßkammer sind zur Druckübertragung mit einem flüssigen Medium, beispielsweise Silikonöl, gefüllt. Die Druckkammer ist so ausgebildet und dimensioniert, daß sich die Membran bei Überlastdruck an ein Stützbett des Gehäuses anlegt, wodurch eine hohe Überlastfestigkeit des Druckaufnehmers im Bereich der Druckkammer erreicht wird. Diese Überlastfestigkeit ist insbesondere dann erforderlich, wenn beispielsweise über mit dem Behälter, dessen Füllstand zu messen ist, verbundene Rohrleitungen dynamische Druckstöße zugeleitet werden, die weit über dem zu messenden hydrostatischen Druck liegen und zur Zerstörung des Sensors führen können.

Die bekannten Druckaufnehmer sind zur Messung in Rohren kleinen Querschnitts, z.B. in Tiefbrunnenrohren, nicht kompakt genug und damit in vielen Fällen ungeeignet.

Ferner sind für bestimmte Anwendungen, insbesondere hydrostatische Füllstandsmessung von Behältern, welche sehr empfindliche Füllgüter enthalten, Druckaufnehmersysteme der oben beschriebenen Art nicht anwendbar, da bei einer mechanischen Beschädigung des Meßsystems das Druckmittelmedium, z.B. Silikonöl, in das Füllgut gelangen und dieses verschmutzen kann. Aus diesem Grunde werden Meßsysteme der geschilderten Art von der Pharma-, Lebensmittel- und Lackindustrie abgelehnt.

Der vorliegenden Erfindung liegt darum die Aufgabe zugrunde, einen Druckaufnehmer zu schaffen, welcher bei gleicher oder gar höherer Überlastfestigkeit möglichst kompakt und schlank aufgebaut ist und ohne flüssige Druckmittel arbeitet. Nach einer weiteren Bedingung sollen die mit dem Medium in Berührung kommenden Teile, nämlich Membran und Gehäuse, aus hochkorrosionsfesten Materialien, beispielsweise Edelstahl, bestehen, um eine Füllstandmessung in mit Säuren bzw. Laugen gefüllten Behältern zu ermöglichen.

Gelöst wird die gestellte Aufgabe bei einem Druckaufnehmer der gattungsgemäßen Art mit den im Kennzeichen des Anspruchs 1 genannten Merkmalen.

Nach diesem Vorschlag, nach welchem in an sich bekannter Weise die Druckkammer gleichzeitig die Meßkammer ist und der Referenzkondensator an einem gemeinsamen Gehäusegrundkörper vorgesehen ist, sind die elektrischen Anschlüssen für den Meß- und Referenzkondensator achsparallel zur Grundkörperachse geführt, enden außerhalb der Grundfläche des zylindrischen Grundkörpers und bilden den elektrischen Anschluß.

Ein derart ausgebildeter Druckaufnehmer hat weit weniger Platzbedarf als die bisher bekannten Druckaufnehmer dieser Art mit ihren relativ unförmigen und verwinkelten Gehäusen. Auch lassen sich Druckaufnehmer dieser Art weit einfacher reinigen, was in vielen Fällen, z.B. bei Anwendung in der Pharma- und Lebensmittelindustrie, von großem Vorteil ist.

Da seitlich aus dem Gehäuse abstehende Anschlüsse fehlen, läßt sich der Druckaufnehmer, wie nach der Aufgabenstellung gefordert, ohne Reduzierung der Membranfläche, also ohne Verzicht auf Empfindlichkeit, in rohrförmige Behälter geringen Querschnitts einsetzen.

Ein besonders kompakter Aufbau ergibt sich, wenn, wie gemäß Anspruch 2 vorgeschlagen ist, am Grundkörper des Sensors auf der dem Meßkondensator gegenüberliegenden Seite der Referenzkondensator vorgesehen ist, welcher hinsichtlich der Abmessungen identisch mit dem Meßkondensator ist, jedoch anstelle einer verformbaren Membran eine nicht-verformbare, metallische Abdeckplatte aufweist.

Konstruktive Maßnahmen für die Gestaltung eines derartigen Druckaufnehmers mit achsparallelen Anschlußdurchführungen sind Gegenstand der Unteransprüche 3 bis 5.

Nach dem Vorschlag gemäß Anspruch 6 können die Elektroden von Meß- und Referenzkondensator in bekannter Dünnschichttechnologie aufgetragen, also z.B. aufgedampft oder aufgesputtert sein. Hierbei ergeben sich Schichtdicken von weniger als 1 $\mu$m.

Möglich sind jedoch auch Schichten, die durch Aufdrucken und dauerhaftes Einbrennen einer leitfähigen Paste erzeugt werden.

Um die eingangs erwähnte hohe Überlastfestigkeit zu erreichen, ist nach dem Vorschlag gemäß Anspruch 7 eine eben ausgebildete metallische Membran vorgesehen, welcher die Oberfläche ein am Grundkörper befindliches Stützbett mit einem glocken- oder kegelförmigen Profil zugeordnet ist. Dieses Stützbett ist so bemessen, daß sich die metallische Membran bei Überlastdruck ohne Bruchgefahr ganzflächig an dieses anlegt.

Eine besonders vorteilhafte Herstellung ergibt sich, wenn der Druckaufnehmer, wie mit Anspruch 8 angegeben, gestaltet ist. Zur Erzielung dieser Gestaltung kann in einem metallischen äußeren Ring ein Einsatz aus elektrisch isolierendem Material angeordnet werden, wobei letzterer die Flächenelektroden trägt. Dieser Einsatz kann beispielsweise aus Druckglas bestehen, das einen ähnlichen Ausdehnungkoeffizienten wie der metallische Grundkörper hat. Dieser Druckaufnehmer kann nach den Vorschlägen gemäß den Ansprüchen 9 bis 11 je nach Belüftung der Kammern zur Ermittlung des absoluten oder des relativen Druckes benutzt werden.

Weitere Merkmale der Erfindung sowie Einzelheiten für die konstruktive Ausbildung sind nachstehend anhand eines in der Zeichnung dargestellten Ausführungsbeispielen im einzelnen erläutert. In der Zeichnung zeigen

Figur 1 - Axialschnitt des im wesentlichen rotationssymmetrischen Druckaufnehmers,

Figur 2 - vergrößerter und übertriebener Axialschnitt des Grundkörpers zur Veranschaulichung des glockenförmigen Profils,

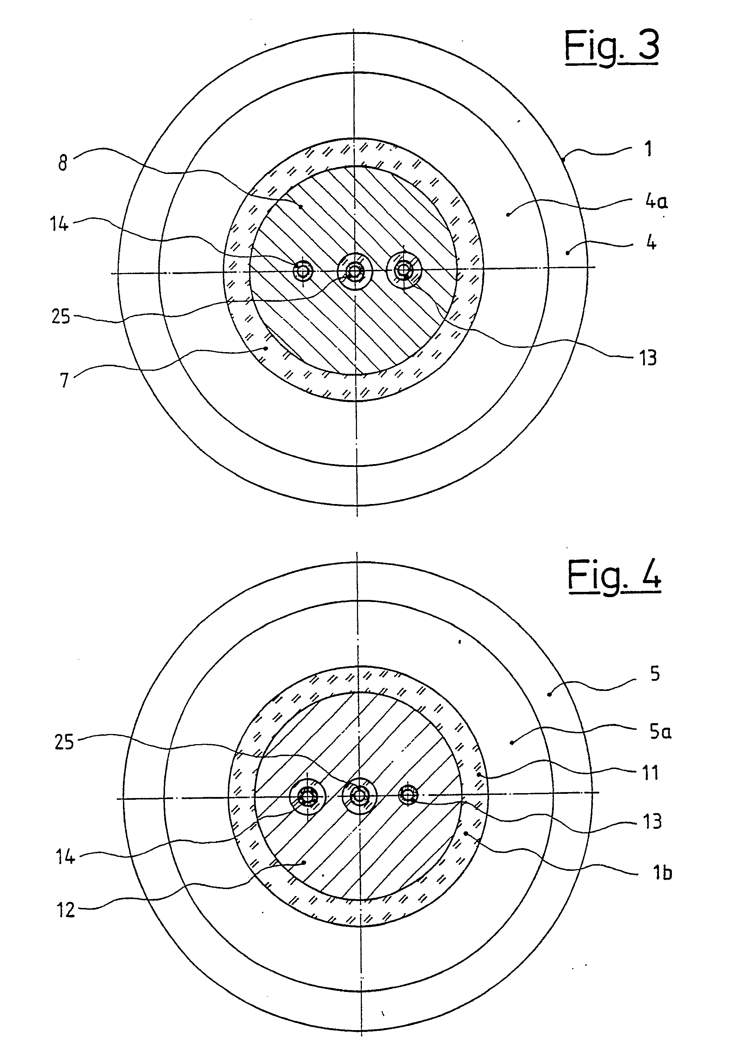

Figur 3 - Ansicht in Richtung III-III in Figur 1 und

Figur 4 - Ansicht in Richtung IV-IV in Figur 1.

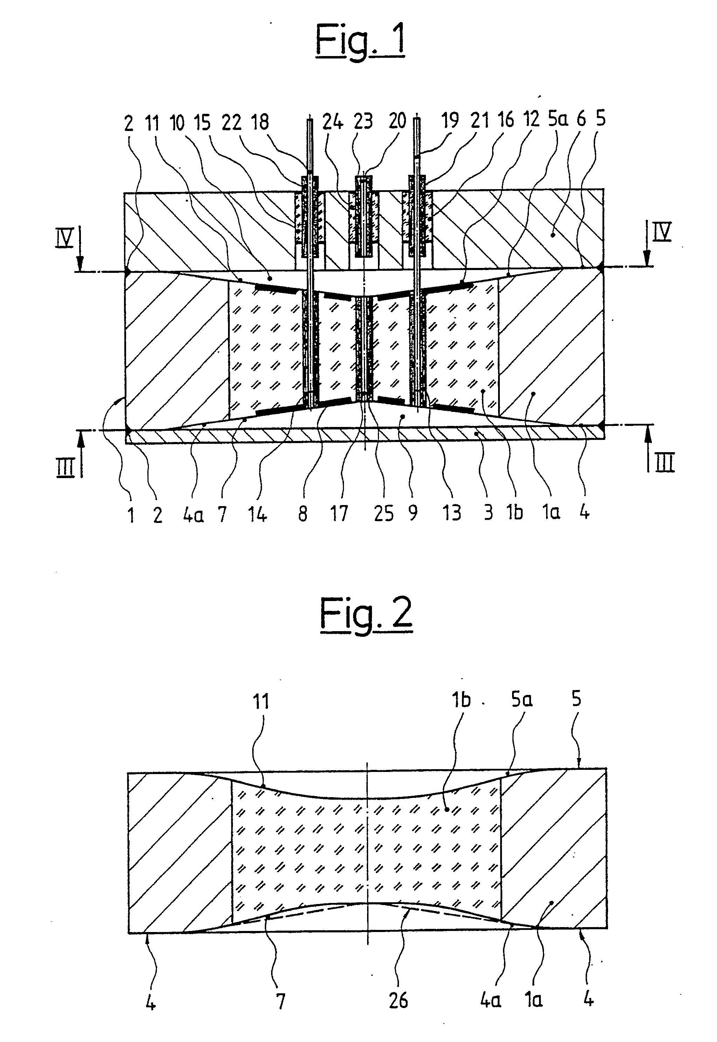

Der grundsätzliche Aufbau des erfindungsgemäßen Druckaufnehmers ist mit dem Schnitt in Figur 1 veranschaulicht.

Der Druckaufnehmer besteht hiernach aus einem Grundkörper 1 in Form eines flachen Zylinders mit beidseitigen Vertiefungen. Die in Figur 1 untere Seite des Grundkörpers 1 bildet zusammen mit einer metallischen, elastisch verformbaren Membran 3 eine Meßkammer 9. Der Grundkörper 1 besteht aus einem zylindrischen Ring 1a aus Metall und einem konzentrischen Einsatz 1b aus Glas.

Die gegenüberliegende Seite des Grundkörpers 1 ist mit einer nicht verformbaren Abdeckplatte 6 verbunden, wobei diese mit dem Grundkörper 1 eine zweite Kammer 10 bildet.

Vorzugsweise bestehen Membran 3, Grundkörperring 1a und Abdeckplatte 6 aus Edelstahl und sind jeweils längs ihrer Umfänge bei 2 miteinander verschweißt.

Die Kammern 9 und 10 sind miteinander über eine Entlüftungsbohrung 17 und mit der äußeren Atmosphäre über eine Entlüftungsbohrung 20 verbunden.

Der Meßkondensator ist einerseits aus der metallischen Membran 3 und andererseits einer in die Oberfläche 7 des Einsatzes 1b eingelassenen oder auf diese hauchdünn mit einer Stärke von < 1 μm aufgebrachten Schichtelektrode 8 gebildet.

Der Referenzkondensator ist einerseits aus der metallischen Abdeckplatte 6 und andererseits der in die Oberfläche 11 des Einsatzes 1b eingelassenen oder hauchdünn aufgebrachten Schichtelektrode 12 gebildet.

Dem elektrischen Anschluß der Schichtelektroden 8 und 12 dienen achsparallel und im mittleren Bereich verlaufende Anschlußstifte 18 und 19, welche elektrisch isoliert die Abdeckplatte 6 durchsetzen und mit der Schichtelektrode 8 bzw. 12 elektrisch verbunden sind. Zu diesem Zweck ist der aus Glas bestehende Einsatz 1b von zwei röhrchenförmigen, metallischen Leitern 13 und 14 durchsetzt, wobei der Leiter 13 mit der Schichtelektrode 12 verbunden, gegenüber der Schichtelektrode 8 jedoch isoliert und der Leiter 14 mit der Schichtelektrode 8 und gegenüber der Schichtelektrode 12 isoliert sind. In axialer Verlängerung der Leiter 13 und 14 sind in die Abdeckplatte 6 Führungsröhrchen 21 und 22 eingesetzt, welche gegenüber der Abdeckplatte mit aus Glas oder dergleichen bestehenden Durchführungen elektrisch isoliert sind. In die Röhrchen 21 und 13 bzw. 22 und 14 sind die die Rückseite der Abdeckplatte 6 überragende Anschlußstifte 19 und 18 elektrisch leitend und abgedichtet eingesetzt.

In ähnlicher Weise sind die Entlüftungsbohrungen 17 und 20 ausgebildet. So ist in den Einsatz 1b mittig ein Röhrchen 25 mit der Durchgangsbohrung 17 eingesetzt, welchem ein ähnlich dimensioniertes Röhrchen 23 mit der Entlüftungsbohrung 20 entspricht. Dieses Röhrchen 23 ist mittels einer Glasdurchführung 24 in eine entsprechende Bohrung der Abdeckplatte 6 eingesetzt.

Die mit dem Ring 1a verbundene Membran 3 und die Abdeckplatte 6 liegen auf gleichem Potential und bilden jeweils eine Elektrode des Meßkondensators bzw. des Referenzkondensators, deren entsprechenden Elektroden 8 und 12 elektrisch gegeneinander und gegenüber dem Grundkörperring 1a, der Membran 3 und der Abdeckplatte 6 isoliert auf den Oberflächen 7 bzw. 11 des Glaseinsatzes 1b angebracht sind.

Bei druckbedingter Verformung der Membran 3 ändert sich der Kapazitätswert des Meßkondensators, während der Kapazitätswert des Referenzkondensators konstant bleibt. Die Kapazitätwerte, die zwischen den Anschlußstiften 18 und 19 gegenüber dem Grundkörper 1 meßbar sind, werden mit einer nicht dargestellten Auswerteelektronik zur Ermittlung der Druckunterschiede und damit des Füllstandes verarbeitet.

Die Membran 3 und die der Membran zugewandte Oberfläche des Grundkörpers 1, nämlich die Fläche 4a des Ringes 1a und die Fläche 7 des Einsatzes 1b, sind so bemessen, daß sich die Membran 3 bei Überschreiten eines vorgegebenen Druckes an das aus den Flächen 4a und 7 gebildete Stützbett des Grundkörpers 1 vollflächig anlegt. Um bei dieser Abstützung einen möglichst gleichmäßigen Flächendruck auf die sich anlegende Membran zu gewährleisten, ist dieses Stützbett so ausgebildet, daß sein Profil dem Querschnitt der bei Überlastdruck deformierten Membran 3 entspricht. Aus diesem Grund hat das Stützbett, wie übertrieben in Figur 2 veranschaulicht ist, die Form einer sehr flachen Glocke. Hierbei setzt sich das Stützbett aus einer am Rand vorgesehenen Kreisringfläche 4, die parallel zur Oberfläche der nicht verformten Membran 3 verläuft, und einer etwa glockenförmig innerhalb der Kreisringfläche 4 gelegenen, vertieften Oberfläche zusammen. Dieses glockenförmige Stützbett wird zu einem Teil, nämlich dem Teil 4a, von der Oberfläche des Ringes 1a und einem anderen Teil von der Oberfläche 7 des Einsatzes 1b gebildet. In vereinfachter Näherung kann die glockenförmige Oberfläche 4a, 7, wie mit der gestrichelten Linie 26 angedeutet, von einem flachen Kreiskegel gebildet werden, wobei die Übergänge zu den Kreisringflächen 4a sowie die Spitze des Kreiskegel abgerundet sind.

Der erfindungsgemäße Druckaufnehmer kann als Absolutdrucksensor eingesetzt werden. In diesem Fall sind die über die Entlüftungsbohrung 17 miteinander verbundenen Kammern 9 und 10 zu evakuieren, worauf die Entlüftungsbohrung 20 zu verschließen ist.

Bei Verwendung des Druckaufnehmers als Re-lativdrucksensor bleibt dagegen die Entlüftungs-bohrung 20 offen. In diesem Fall ist dafür zu sorgen, daß der Druckaufnehmer so montiert ist, daß keine Flüssigkeit auf seine Rückseite gelangen kann.

Die in der Zeichnung übertrieben stark dargestellten Schichtelektroden 8 und 12 sind als dünne leitende Schichten auf die Oberfläche des Glaseinsatzes 1b aufgebracht, z.B. bei einer Schichtdicke von weniger als 1 $\mu$m aufgedampft oder aufgesput-tert.

Durch achsparallele Herausführung der elektrischen Anschlüsse, die Verwendung einer zweiten druckunabhängigen Kammer zur Bildung des Referenzkondensators auf der Rückseite des Druckaufnehmers, den Verzicht auf Füllflüssigkeiten zur Druckübertragung sowie die ganzflächige Abstützung der Membran 3 im Überlastfall wird ein Druk-kaufnehmer erreicht, der die eingangs erläuterte Aufgabe in sehr vorteilhafter Weise löst.

## FIGURENLEGENDE

| | |
|---|---|
| 1 | Grundkörper |
| 1a | Ring |
| 1b | Einsatz |
| 2 | Schweißnähte |
| 3 | Membran |
| 4 | Kreisringfläche |
| 4a | Teil des glockenförmigen Stützbettes |
| 5 | Kreisringfläche |
| 5a | Teil des glockenförmigen Stützbettes |
| 6 | Abdeckplatte |
| 7 | Teil des glockenförmigen Stützbettes |
| 8 | Schichtelektrode |
| 9 | 1. Kammer |
| 10 | 2. Kammer |
| 11 | Teil des glockenförmigen Stützbettes |
| 12 | Schichtelektrode |
| 13 | Metallischer Leiter |
| 14 | Metallischer Leiter |
| 15 | Elektrisch isolierte Durchführung |
| 16 | Elektrisch isolierte Durchführung |
| 17 | Entlüftungsbohrung |
| 18 | Anschlußstift |
| 19 | Anschlußstift |
| 20 | Entlüftungsbohrung |
| 21, 22, 23 | Röhrchen |
| 24 | Durchführung |
| 25 | Röhrchen |
| 26 | Kreiskegel |

## Patentansprüche

1. Druckaufnehmer für hydrostatische Füllstandmessung mit einer metallischen, kreisförmigen Membran, welche unter Bildung einer Kammer mit einem geschlossenen Gehäuse verbunden ist, und mit einem durch Auslenkung der Mem-bran veränderbaren Meßkondensator sowie ei-nem Referenzkondensator mit konstanter Ka-pazität, dadurch gekennzeichnet, daß die metallische Membran (3) die erste Elektrode des Meßkondensators bildet, die längs ihres Umfanges mit einem zylindrischen, das Gehäuse bildenden Grundkörper (1) verbunden, vorzugsweise verschweißt (2), ist, daß die der Membran (3) zugewandte Oberfläche des Grundkörpers (1) eine elektrisch gegenüber diesem und der Membran (3) isolierte, flächige Elektrode (8) trägt, welche die zweite Elektrode des Meßkondensator bildet, daß der Referenzkondensator am Grundkörper (1) vorgesehen ist und daß die Elektroden (8, 12) des Meß-und Referenzkondensators mit metallischen Anschlußstiften (18, 19) elektrisch leitend verbunden sind, welche im Mittelbereich des Grundkörpers (1) angeordnet sind und diesen achsparallel zur Grundkörperachse durchsetzen und außerhalb der Grundfläche des Grundkörpers (1) zur Bildung des elektrischen Anschlusses enden.

2. Druckaufnehmer nach Anspruch 1, dadurch gekennzeichnet, daß am Grundkörper (1) auf der dem Meßkondensator (3, 8) gegenüberliegenden Seite der Referenzkondensator vorgesehen ist, der aus einer nicht-verformbaren, metallischen Abdeckplatte (6), welche mit dem Grundkörper längs des Umfangs verbunden, vorzugsweise verschweißt (2), ist, und einer an der Oberfläche (5, 5a, 11) des Grundkörpers (1) elektrisch gegenüber diesem und der Abdeckplatte (6) isoliert angeordneten flächigen Elektrode (12) besteht.

3. Druckaufnehmer nach Anspruch 1 oder 2, dadurch gekennzeichnet, daß der Grundkörper (1) aus einem metallischen äußeren Ring (1a) und einem in dessen Mitte angeordneten Einsatz (1b) aus elektrisch isolierendem Material, vorzugsweise Glas, besteht, dessen der Membran (3) und der Abdeckplatte (6) zugewandten Flächen (7, 11) Schichtelektroden (8, 12) tragen.

4. Druckaufnehmer nach Anspruch 3, dadurch gekennzeichnet, daß der Einsatz (1b) achsparallele Durchkontaktierungsbohrungen aufweist, in die metallische Leiter (13, 14) eingesetzt sind, welche einerseits mit den Elektroden (8, 12) und andererseits mit den Anschlußstiften (18, 19) verbunden sind, die mittels elektrisch isolierter Durchführungen (15, 16) vorzugsweise aus Druckglas durch die Abdeckplatte (6) hindurchgeführt sind.

5. Druckaufnehmer nach Anspruch 4, dadurch gekennzeichnet, daß die im Einsatz (1b) vorgesehenen metallischen Leiter (13, 14) röhrchenförmig ausgebildet sind, daß in die elektrisch isolierten Durchführungen (15, 16) metallische Röhrchen (21, 22) eingesetzt sind und daß die metallischen Leiter (13, 14) und Röhrchen (21, 22) koaxial zueinander angeordnet und von den Anschlußstiften (18, 19) durchsetzt sind.

6. Druckaufnehmer nach einem oder mehreren der Ansprüche 1 bis 5, dadurch gekennzeichnet, daß die Elektroden (8, 12) in Form von dünnen elektrisch leitenden Schichten auf den Grundkörper (1) aufgetragen, vorzugsweise aufgedampft bzw. aufgesputtert, sind.

7. Druckaufnehmer nach einem der Ansprüche 1 bis 6, dadurch gekennzeichnet, daß die metallische Membran (3) eben ist und die dieser zugewandte Oberfläche des Grundkörpers (1) als Stützbett (4, 4a, 7) ausgebildet ist, das ein glocken- oder kegelförmiges Profil besitzt, an welchem die Membran (3) bei Überlastdruck, vorzugsweise bei 1,25- bis 2-fachen Nenndruck, ganzflächig anliegt.

8. Druckaufnehmer nach Anspruch 7, dadurch gekennzeichnet, daß das Stützbett des Grundkörpers (1) eine außengelegene, schmale, zur Oberfläche der unbelasteten Membran (3) parallel verlaufende Kreisringfläche (4) aufweist, in deren Innern die glockenförmig oder kegelförmig flach vertiefte, konzentrische Kreisfläche (4a, 7) gelegen ist.

9. Druckaufnehmer nach Anspruch 7 oder 8, dadurch gekennzeichnet, daß die von Membran (3) bzw. Abdeckplatte (6) und Grundkörper (1) gebildeten beiden Kammern (9, 10) über eine vorzugsweise zentrisch im Grundkörper (1) angeordnete Entlüftungsbohrung (17) miteinander verbunden sind.

10. Druckaufnehmer nach Anspruch 9, dadurch gekennzeichnet, daß die Kammern (9, 10) evakuiert sind.

11. Druckaufnehmer nach Anspruch 9, dadurch gekennzeichnet, daß die Kammer (9, 10) über eine Entlüftungsbohrung (20) mit der äußeren Atmosphäre verbunden sind.

EP 0 439 790 A2

# Fig. 1

# Fig. 2

Fig. 3

Fig. 4